# EUROPÄISCHE PATENTSCHRIFT

(11) **EP 4 419 993 B1**
(45) Veröffentlichungstag und Bekanntmachung des Hinweises auf die Patenterteilung: **25.11.2026**
(21) Anmeldenummer: 23773218.5
(22) Anmeldetag: 18.09.2023
(51) Int. Cl.: G06F 8/65, G06F 12/02

(54) **ÄNDERN DES SPEICHERINHALTS EINES HAUPTSPEICHERS EINES MIKROCONTROLLERS OHNE SEPARATE SPEICHERVERWALTUNGSEINHEIT**
CHANGING THE MEMORY CONTENT OF A MAIN MEMORY OF A MICROCONTROLLER WITHOUT A SEPARATE MEMORY MANAGEMENT UNIT
CHANGEMENT DU CONTENU D'UNE MÉMOIRE PRINCIPALE D'UN MICROCONTRÔLEUR SANS UNITÉ DE GESTION DE MÉMOIRE DISTINCTE

(30) Priorität: 14.10.2022 DE 102022003789
(43) Veröffentlichungstag der Anmeldung: 28.08.2024
(73) Patentinhaber: Mercedes-Benz Group AG, 70372 Stuttgart (DE)
(72) Erfinder: WILMER, Thorsten, 71063 Sindelfingen (DE); WAGNER, Sebastian, 71272 Renningen (DE); KIRICHENKO, Mark, 10243 Berlin (DE); BOLEMANN, Thomas, 75395 Ostelsheim (DE)
(74) Vertreter: Novagraaf Group
(86) Internationale Anmeldenummer: PCT/EP2023/075626
(87) Internationale Veröffentlichungsnummer: WO 2024/078825

(56) Entgegenhaltungen:
- US-B1- 6 789 157
- US-B1- 7 472 380

## Beschreibung

Die Erfindung betrifft ein Verfahren zum Ändern des Speicherinhalts eines Hauptspeichers eines Mikrocontrollers ohne separate Speicherverwaltungseinheit nach der im Oberbegriff des Anspruchs 1 näher definierten Art und die Anwendung eines solchen Verfahrens sowie einen Mikrocontroller und ein Fahrzeug umfassend einen solchen Mikrocontroller.

Mikrocontroller, teilweise auch als System-on-a-Chip (SoC) bezeichnet, finden sich in den verschiedensten Geräten und Maschinen zum Lösen unterschiedlichster Aufgaben. Beispielsweise werden Mikrocontroller als Steuergerät für Haushaltsgeräte oder auch integriert in Fahrzeuge zur Bereitstellung von Fahrzeugfunktionen genutzt.

Die von einem Mikrocontroller umzusetzenden Steuerungsbefehle werden in Form von Quellcode auf einem Speichermedium vorgehalten. Wie generell für informationstechnische Systeme üblich, kann es erforderlich sein Softwareaktualisierungen einzuspielen, beispielsweise um Sicherheitslücken zu schließen, Bugs zu beheben oder neue Funktionalitäten bereitzustellen. Mikrocontroller können eine Speicherverwaltungseinheit, auch als Memory Management Unit (MMU) bezeichnet, aufweisen, welche dazu dient, die virtuellen Adressen jedes einzelnen durch den Mikrocontroller verarbeiteten Prozesses in physische Adressen eines verwendeten Speichermediums umzurechnen. Werden Softwareupdates installiert, so muss der entsprechende im Speichermedium vorgehaltene Programmcode geändert werden. Dies ist unter Verwendung der Speicherverwaltungseinheit problemlos möglich.

Die von einem Mikrocontroller zu bewältigenden Aufgaben sind typischerweise vergleichsweise einfach. Zudem sollen Mikrocontroller kostengünstig hergestellt werden. Aus diesen Gründen gilt es die Komplexität von Mikrocontrollern so gering wie möglich auszugestalten. Oftmals wird daher auf die Integration von Speicherverwaltungseinheiten in einen Mikrocontroller verzichtet. In diesem Falle ist das Installieren von Softwareaktualisierungen nicht mehr ohne weiteres möglich. Somit liegt der Bedarf vor Mittel bereitzustellen, die das Installieren von Softwareaktualisierungen auf einem Mikrocontroller ohne Speicherverwaltungseinheit ermöglichen.

Ein möglicher Ansatz ist aus der DE 10 2011 106 078 A1 bekannt, welche eine Fahrzeugeinheit und ein Verfahren zu dessen Betrieb offenbart. Bei der Fahrzeugeinheit handelt es sich um eine Recheneinheit, welche die Fähigkeit aufweist, eigenständig eine Softwarereparatur durchzuführen. Die Fahrzeugeinheit weist hierzu eine Mikrokernelarchitektur auf. Das Betriebssystem ist hierzu in eine Hauptbetriebssystem-Einheit, eine Krypto-Einheit und eine Supervisions-Einheit partitioniert. Zusätzlich kann optional eine Policy-Einheit vorgesehen sein. Auf einem Flash wird eine Basisversion des Betriebssystems als Backupimage vorgehalten, wobei die Krypto-Einheit und die Supervisions-Einheit den Betrieb der Hauptbetriebssystem-Einheit überwachen und bei Fehlfunktionen ein Neuinstallieren des Betriebssystems aus dem Backupimage bewirken. Durch das Vorsehen der Krypto-Einheit und der Supervisions-Einheit kann auf das Vorsehen separater Speichercontroller verzichtet werden. Nachteilig ist dabei jedoch, dass die hier offenbarte Fahrzeugeinheit auf der Mikrokernelarchitektur aufbaut und somit die hiermit einhergehenden Nachteile wie reduzierte Ausführungsgeschwindigkeit, hoher Synchronisationsaufwand der Nutzer-Prozesse sowie eingeschränkter Hardware-Zugriff für die ausgeführten Prozesse aufweist. Die Funktion der Ansteuerung des Speichers wird durch die Supervisions-Einheit und die Krypto-Einheit durchgeführt, welche als Read-Only-Einheiten ausgeführt sind. Dies schränkt die Flexibilität in der Anpassung der Fahrzeugeinheit an geänderte Randbedingungen stark ein, da die Speicherverwaltungslogik nicht angepasst werden kann.

Ferner offenbart die US 7,472,380 B1 ein Verarbeitungssystem mit einer Komponenten-Architektur-Plattform Unterstützung mit dessen Hilfe das Durchführen von Differenzupdates für eingebettete Systeme ermöglicht wird. Zur Erzeugung des Differenzupdates wird der in einem mobilen elektronischen Gerät vorhandene Code mit dem neuen Code verglichen. Sich dabei unterscheidende Codeabschnitte werden als zum Einbringen in das elektronische Gerät markiert. Die markierten Codeabschnitte werden dann zu einem Updatepaket gepackt, welches zusammen mit einer Nachschlagtabelle auf das elektronische Gerät übertragen wird. Die Nachschlagtabelle umfasst eine Zuordnung zwischen den zu aktualisierenden Codeabschnitten und den Speicheradressen eines Speichers des elektronischen Systems, an denen sich die zu aktualisierenden Codeabschnitte befinden. Die Verwaltung der Nachschlagtabelle erfolgt durch eine Nachschlagtabellenverwaltungseinheit, welche in einem Prozessor oder in Code implementiert ist.

Zudem offenbart die US 6,789,157 B1 eine Plug-In ausgestattete und aktualisierbare Firmware. Dabei werden in einem nichtflüchtigen Speicher vorgehaltene Softwaremodule kategorisiert. Ein erstes Softwaremodul einer ersten Kategorie wird an eine feste Speicheradresse extrahiert, welche im ersten Softwaremodul enthalten ist. Ein zweites Softwaremodul einer zweiten Kategorie wird an eine während der Laufzeit zugewiesene Speicheradresse extrahiert. Anschließend wird diese während der Laufzeit bestimmte Speicheradresse ebenfalls im nichtflüchtigen Speicher gespeichert.

Der vorliegenden Erfindung liegt die Aufgabe zugrunde ein verbessertes Verfahren zum Ändern des Speicherinhalts eines Hauptspeichers eines Mikrocontrollers ohne separate Speicherverwaltungseinheit anzugeben, mit dessen Hilfe eine besonders einfache, zuverlässige und flexible Änderung des Speicherinhalts ermöglicht wird.

Erfindungsgemäß wird diese Aufgabe durch ein Verfahren zum Ändern des Speicherinhalts eines Hauptspeichers eines Mikrocontrollers ohne separate Speicherverwaltungseinheit mit den Merkmalen des Anspruchs 1 gelöst. Vorteilhafte Ausgestaltungen und Weiterbildungen sowie eine Anwendung eines solchen Verfahrens, ein Mikrocontroller und ein Fahrzeug mit einem solchen Mikrocontroller ergeben sich aus den hiervon abhängigen Ansprüchen.

Ein gattungsgemäßes Verfahren zum Ändern des Speicherinhalts eines Hauptspeichers eines Mikrocontrollers ohne separate Speicherverwaltungseinheit, wobei ein Teil des Hauptspeichers durch eine Basisfirmware belegt ist, sieht vor, dass
- beim Einbringen der Basisfirmware in den Hauptspeicher wenigstens ein Komponentenblock mit in den Hauptspeicher geschrieben wird, wobei der Komponentenblock Codebestandteile zur Bereitstellung zumindest einer Firmwarekomponente und/oder zumindest einer Anwendungsprogrammkomponente sowie Speicherverwaltungsinformationen umfasst; und
- zum Ändern zumindest eines Teils der Codebestandteile wenigstens eines Komponentenblocks ein Prozessor des Mikrokontrollers die Speicherverwaltungsinformationen verarbeitet und zu schreibende Informationen an durch die Speicherverwaltungsinformationen definierten Stellen in den Hauptspeicher schreibt, und die Speicherverwaltungsinformationen des geänderten Komponentenblocks aktualisiert werden.

Erfindungsgemäß ist dabei ferner vorgesehen, dass folgender Aufbau für einen jeweiligen Komponentenblock realisiert wird:
- eine Längen-Sektion, definierend die Länge des durch den jeweiligen Komponentenblock auf dem Hauptspeicher belegten Bereichs;
- eine Text-Sektion, umfassend die Codebestandteile zur Bereitstellung der wenigstens einen Firmwarekomponente und/oder wenigstens einer Anwendungsprogrammkomponente;
- eine Eingangsschnittstellen-Sektion, definierend welche Eingangsschnittstellen durch den jeweiligen Komponentenblock zum Einlesen von Eingangsdaten ausgelesen werden;
- eine Ausgabeschnittstellen-Sektion, definierend welche Ausgabeschnittstellen durch den jeweiligen Komponentenblock zum Ausgeben von Ausgabedaten geschrieben werden; und
- eine Parameter-Sektion, definierend eine Ausführungsfrequenz der von einem jeweiligen Komponentenblock bereitstellbaren Firmwarekomponenten und/oder Anwendungsprogrammkomponenten sowie eine Anwendungsspeicheranforderungsinformation, welche definiert, welche Speichergröße bei der Ausführung einer jeweiligen Firmwarekomponente und/oder Anwendungsprogrammkomponente auf einem RAM des Mikrocontrollers belegt wird.

Bei dem Hauptspeicher des Mikrocontrollers handelt es sich hier nicht um den Arbeitsspeicher, auch als Random-Access-Memory (RAM) bezeichnet, sondern um einen Hauptdatenträger, auf dem der Quellcode der Basisfirmware enthalten ist. Beispielsweise kann es sich bei dem Hauptspeicher um ein Flashspeicherelement handeln. Um den Aufbau des Mikrocontrollers zu vereinfachen, wurde auf die Integration einer Speicherverwaltungseinheit, also eine MMU, verzichtet. Mit Hilfe des erfindungsgemäßen Verfahrens ist es dennoch möglich, den Inhalt des Hauptspeichers nach seiner initialen Bespielung mit Daten zu ändern. Die Instruktionen zum Ansteuern des Hauptspeichers sind dabei selbst im änderbaren Teil der Datenstruktur enthalten, was eine besonders flexible Anpassung der Ansteuerung des Hauptspeichers ermöglicht. Dies ermöglicht einen besonders flexiblen Einsatz des Mikrocontrollers auch unter geänderten Randbedingungen.

Die Basisfirmware stellt dabei ein unveränderbares Basisgerüst an Software zur Bereitstellung grundlegender Funktionen dar. Weitergehende Funktionen können dann in Form von einem oder mehreren Komponentenblöcken an diese Basisfirmware angehängt werden. Neben ergänzenden Firmwarekomponenten können dabei auch Anwendungsprogrammkomponenten in einen Komponentenblock geschrieben werden, was die Bereitstellung von Anwendungsprogrammen mittels des Mikrocontrollers erlaubt. Es existieren durch die Speicherverwaltungsinformationen definierte feste Regeln, an welchen Stellen in den Komponentenblöcken Informationen auffindbar sind, welche den Prozessor des Mikrocontrollers dazu veranlassen, die jeweils relevanten Stellen des Hauptspeichers zum Ändern des Speicherinhalts anzusteuern.

Die jeweils zu schreibenden Informationen, also beispielsweise Softwareaktualisierungen, können dem Mikrocontroller von extern mitgeteilt werden. Hierzu verfügt der Mikrocontroller über geeignete Schnittstellen. Beispielsweise kann ein Speichermedium wie ein USB-Stick oder eine SD-Karte in einen geeigneten Leseslot eingesteckt werden und die zu schreibenden Informationen daraus ausgelesen werden. Auch kann der Mikrocontroller in ein informationstechnisches Netzwerk mehrerer Recheneinheiten eingebunden sein und die zu schreibenden Informationen über dieses Netzwerk beziehen. Dabei kann eine Recheneinheit dieses Netzwerks als Kommunikationsmodul ausgeführt sein und so Informationen auch über das Internet, beispielsweise per Mobilfunk, beziehen.

"Schreiben" meint in diesem Zusammenhang ein Löschen, Ergänzen oder Überschreiben bereits vorhandener Informationen im Hauptspeicher. Dabei können gegebenenfalls auch neue Komponentenblöcke in den Hauptspeicher geschrieben werden und an bestehende Komponentenblöcke angehängt werden. Entsprechend werden nicht nur die Speicherverwaltungsinformationen des initial letzten Komponentenblocks in der Kette aus Komponentenblöcken geändert, sondern auch neue Speicherverwaltungsinformationen für die neu angelegten und angehängten Komponentenblöcke definiert.

Anstelle, dass neue Komponentenblöcke an eine bestehende Kette aus Basisfirmware und Komponentenblöcken angehängt werden, kann der vollständige Inhalt des Hauptspeichers bereits in die Basisfirmware und zumindest einen Komponentenblock unterteilt sein. Beim Ändern des Speicherinhalts kann dann sukzessive dieser eine Komponentenblock in mehrere Komponentenblöcke unterteilt werden. Weist der Hauptspeicher beispielsweise eine Größe von 256 MB auf und belegt darauf die Basisfirmware 20 MB und ein erster Komponentenblock, umfassend ergänzende Firmwarekomponenten 60 MB, so beträgt die Größe eines zweiten (Platzhalter-) Komponentenblocks 176 MB. Dieser zweite 176 MB große Komponentenblock kann dann beim Ändern des Speicherinhalts des Hauptspeichers in einen neuen zweiten und einen dritten Komponentenblock unterteilt werden, bzw. er zerfällt dann in diese Komponentenblöcke. Sollen beispielsweise 56 MB an weiteren Informationen in den Hauptspeicher geschrieben werden, so teilen sich die 176 MB auf den neuen zweiten Komponentenblock der Größe 56 MB und den dritten Komponentenblock der Größe 120 MB auf. So lässt sich sukzessive der zur Verfügung stehende Speicherplatz auf dem Hauptspeicher in Komponentenblöcke unterteilen.

Die Text-Sektion stellt dabei den relevanten Teil des jeweiligen Komponentenblocks zur Bereitstellung der Firmwarekomponente bzw. Anwendungsprogrammkomponente dar. Die Text-Sektion enthält somit den eigentlichen "Payload". Die übrigen Sektionen stellen dann entsprechend die Speicherverwaltungsinformationen dar.

Die Längen-Sektion beschreibt die Größe des durch den jeweiligen Komponentenblock beschriebenen Inhalts des Hauptspeichers. Hierbei wird eine für die Ausführungsform des jeweiligen Hauptspeichers verarbeitbare Notation gewählt, beispielsweise eine Dateigröße, eine Anzahl an Flashpages, ein Adressbereich oder dergleichen. In den Hauptspeicher werden Informationen sukzessive abgelegt, sodass eine Reihe oder Kette an beschriebenen Abschnitten entsteht. Der Mikrocontroller kann dann durch Auslesen der entsprechend beschriebenen Länge der durch die Komponentenblöcke beschriebenen Teile bestimmen, an welcher Stelle genau ein jeweiliger Komponentenblock auf dem Hauptspeicher beginnt und endet.

Die durch die jeweiligen Komponentenblöcke bereitgestellten Programme bzw. Programmteile erfordern gegebenenfalls das Einlesen von Eingangsdaten sowie Bereitstellen von Ausgebedaten nach ihrer Abarbeitung durch den Prozessor. Die Eingangsschnittstellen-Sektion enthält dann die Informationen die definieren, von welchen Eingangsschnittstellen welche Eingangsdaten eingelesen werden müssen. Ein Komponentenblock kann eine einzige Firmwarekomponente und/oder eine einzige Anwendungsprogrammkomponente oder auch mehrere Firmwarekomponenten und/oder mehrere Anwendungsprogrammkomponenten enthalten. Für jede einzelne Firmwarekomponente bzw. jede einzelne Anwendungsprogrammkomponente existiert dann eine eigene Schnittstellendefinition, welche Eingangsschnittstellen und welche Ausgabeschnittstellen verwendet werden. Über die Ausgabeschnittstellen-Sektion wird also entsprechend für jede dieser Programmkomponenten definiert, welche Ausgabedaten bereitgestellt werden sowie ein entsprechender Bezeichner der Ausgabeschnittstellen.

Über die Parameter-Sektion wird dem Mikrocontroller mitgeteilt, mit welcher Ausführungsfrequenz die einzelnen von den Komponentenblöcken enthaltenen Programmkomponenten auszuführen sind. Zusätzlich enthält die Parameter-Sektion eine Information, wieviel Speicher durch die jeweilige Programmkomponente auf dem RAM reserviert werden muss. Dies ermöglicht es zuverlässig ausreichend Speicher auf dem RAM zur Verfügung zu stellen.

Ein jeweiliger Komponentenblock, sprich die einzelnen von den Komponentenblöcken enthaltenen Programmkomponenten, können jeweils Funktionen der Basisfirmware aufrufen und nutzen. Programmkomponenten können jedoch nicht andere Programmkomponenten in anderen Komponentenblöcken direkt aufrufen. Die Kommunikation zwischen den Komponentenblöcken geschieht über die entsprechenden Eingangsdaten und Ausgabedaten.

Die von den Komponentenblöcken enthaltenen Codebestandteile sind dabei so zu kompilieren, dass der Code positionsunabhängig ist, da die Reihenfolge und Position des Komponentenblocks im Hauptspeicher nicht bekannt ist. Somit ist die Verwendung von globalen oder statischen Variablen nicht erlaubt. Alle Informationen, die für einen Komponentenblock relevant sind, werden als Funktionsaufruf, auch als Funktion Call bezeichnet, übergeben.

Entsprechend einer vorteilhaften Ausgestaltung des Verfahrens werden beim Hochfahren des Mikrocontrollers Variablen, welche durch einen jeweiligen Komponentenblock ausgebare Ausgabedaten repräsentieren, in den RAM des Mikrocontrollers geschrieben. "Beim Hochfahren des Mikrocontrollers" bedeutet in diesem Zusammenhang das Ausführen der Basisfirmware durch den Prozessor des Mikrocontrollers, wenn der Mikrocontroller gestartet wird. So werden initial Teile des RAMs durch die Variablen aufgefüllt. Diese Variablen sind stellvertretend für die durch die Programmkomponenten der Komponentenblöcke generierbaren Ausgabedaten. Dies ermöglicht es den jeweiligen Programmkomponenten die Ausgabedaten auch nach ihrer Abarbeitung durch den Prozessor in den RAM zu schreiben. Diese Variablen können als eine oder mehrere Auslagerungsdateien zusammengefasst sein.

Eine weitere vorteilhafte Ausgestaltung des Verfahrens sieht ferner vor, dass beim Hochfahren des Mikrocontrollers für jeden Komponentenblock unter Berücksichtigung der jeweiligen Speicherverwaltungsinformationen folgende Informationen in den RAM des Mikrocontrollers geschrieben werden:
- eine Mapping-Struktur, definierend an welche Stellen des RAMs vom jeweiligen Komponentenblock erzeugbare Ausgabedaten geschrieben werden sowie eine Zuordnung, in welchen Speicherbereichen des RAMs vom jeweiligen Komponentenblock erforderliche Eingangsdaten abgelegt sind;
- eine Funktionsreihenfolgen-Struktur, definierend eine jeweilige Reihenfolge der zur Bereitstellung der durch den jeweiligen Komponentenblock bereitstellbaren Firmwarekomponenten und/oder Anwendungsprogrammkomponenten durch den Prozessor abzuarbeitenden Funktionen; und
- für jede Firmwarekomponente und/oder Anwendungsprogrammkomponente des jeweiligen Komponentenblocks: eine Ausgabestruktur, definierend durch die jeweilige Firmwarekomponente und/der Anwendungsprogrammkomponente zu schreibende Ausgabedaten.

Auch hier meint "beim Hochfahren des Mikrocontrollers" das Ausführen der Basisfirmware durch den Prozessor beim Starten des Mikrocontrollers. Die Mapping-Struktur beschreibt dabei, wo die im vorigen erwähnten Variablen in den RAM geschrieben werden sowie welche Programmkomponente entsprechend welcher Ausgabedaten erzeugt und welche Eingangsdaten einliest. Dies ermöglicht es einer jeden Programmkomponente, also einer jeweiligen Firmwarekomponente bzw. Anwendungsprogrammkomponente, zuverlässig die zu verarbeitenden Informationen einzulesen und auszugeben.

Über die Funktionsreihenfolgen-Struktur wird dem Mikrocontroller mitgeteilt, in welcher Reihenfolge die zur Bereitstellung bestimmter Funktionalitäten von den Komponentenblöcken enthaltenen Programmkomponenten auszuführen sind.

Die Ausgabestruktur beschreibt mit anderen Worten, welche Variablen von den jeweiligen Programmkomponenten ausgegeben werden.

Eine Eingangsschnittstelle bzw. Ausgabeschnittstelle kann definiert sein durch einen eindeutigen Namen, einen eindeutigen Versionsbezeichner sowie eine eindeutige (Datei-)Größe. So werden über die jeweiligen Schnittstellen die Variablen übergeben. Die einzelnen Variablen können unterschiedliche Größen aufweisen.

Einer jeden ausgeführten Programmkomponente wird bei jeder Ausführung ein Zeiger zur jeweiligen Mapping-Struktur übergeben.

Es können dabei auch Nullzeiger, auch als Null-Pointer bezeichnet, übergeben werden, sodass einzelne Programmkomponenten optional auch als nicht existierend erachtet werden können.

Die über die Funktionsreihenfolgen-Struktur definierte Reihenfolge stellt einen Funktionszeiger dar. Initial wird dieser Funktionszeiger durch den Beginn der jeweiligen Text-Sektion, umfassend die Grundbestandteile einer jeweiligen Programmkomponente, ausgebildet.

Die Basisfirmware geht beim Initialisieren des Mikrocontrollers die einzelnen Komponentenblöcke durch, reserviert die im vorigen ausgeführten Bereiche des RAMs und schreibt die im vorigen erwähnten Zeiger entsprechend der Mapping-Struktur in den RAM.

Entsprechend einer weiteren vorteilhaften Ausgestaltung des erfindungsgemäßen Verfahrens wird einem jeweiligen Komponentenblock direkter Hardwarezugriff auf die Hardwarekomponenten des Mikrocontrollers gewährt. So kann der direkte Zugriff auf die Hardware des Mikrocontrollers für die einzelnen Programmkomponenten der Komponentenblöcke erlaubt oder verboten sein. Je mehr Programmkomponenten Zugriff auf die Hardware erhalten, desto kleiner kann die Basisfirmware ausgestaltet werden.

Bevorzugt wird vor Ausführung der zumindest einen Firmwarekomponente und/oder zumindest einer Anwendungsprogrammkomponente eines jeweiligen Komponentenblocks der Schreibzugriff auf den RAM eingeschränkt, sodass für den jeweiligen Komponentenblock lediglich durch den jeweiligen Komponentenblock ausgebare Ausgabedaten in den RAM schreibbar sind. Mit anderen Worten kann vor der Ausführung einer Komponente die Memory-Protection-Unit (MPU) konfiguriert werden, sodass nur der jeweilige Teil des RAMs, in den die Ausgabedaten der jeweiligen Programmkomponente geschrieben werden, auch beschreibbar ist. So können von ISO 26262 geforderte "Freedom of Interference" sichergestellt werden.

Eine erfindungsgemäße Anwendung eines im vorigen beschriebenen Verfahrens sieht die Verwendung zum Durchführen einer Softwareaktualisierung eines im Hauptspeicher des Mikrocontrollers bevorrateten Programms vor, insbesondere zum Aktualisieren der Firmware des Mikrocontrollers. Mit Hilfe des erfindungsgemäßen Verfahrens wird es auch solchen Mikrocontrollern erlaubt Speicherinhalte des jeweiligen Hauptspeichers zu ändern, die über keine separate Speicherverwaltungseinheit verfügen. So können durch den Mikrocontroller abzuarbeitende Programme aktualisiert oder gar neue Programme eingespielt werden. Besonders vorteilhaft kann dabei auch die Firmware des Mikrocontrollers geändert werden. Hierzu ist die Firmware in eine Basisfirmware und in den Komponentenblöcken vorgesehener Firmwarekomponenten unterteilt. Die Basisfirmware stellt dabei grundlegende Instruktionen zum Ansteuern der verwendeten Hardware zur Verfügung, um relevante Schnittstellen auszulesen und Hardwarekomponenten anzusprechen. Ergänzende Funktionalitäten sind in den Firmwarekomponenten der Komponentenblöcke enthalten.

Zudem ist ein erfindungsgemäßer Mikrocontroller zur Ausführung eines im vorigen beschriebenen Verfahrens eingerichtet.

Erfindungsgemäß umfasst ein Fahrzeug zumindest einen solchen Mikrocontroller.

Weitere vorteilhafte Ausgestaltungen des erfindungsgemäßen Verfahrens zum Ändern des Speicherinhalts eines Hauptspeichers eines Mikrocontrollers ohne separate Speicherverwaltungseinheit ergeben sich auch aus den Ausführungsbeispielen, welche nachfolgend unter Bezugnahme auf die Figuren näher beschrieben werden.

Dabei zeigen:
- Fig. 1: eine schematisierte Darstellung des Inhalts eines Hauptspeichers und eines Arbeitsspeichers eines erfindungsgemäßen Mikrocontrollers; und
- Fig. 2: eine schematisierte Darstellung des Inhalts eines ergänzend zu einer Basisfirmware in den Hauptspeicher geschriebenen Komponentenblocks, unterteilt in den Inhalt des Hauptspeichers und des Arbeitsspeichers.

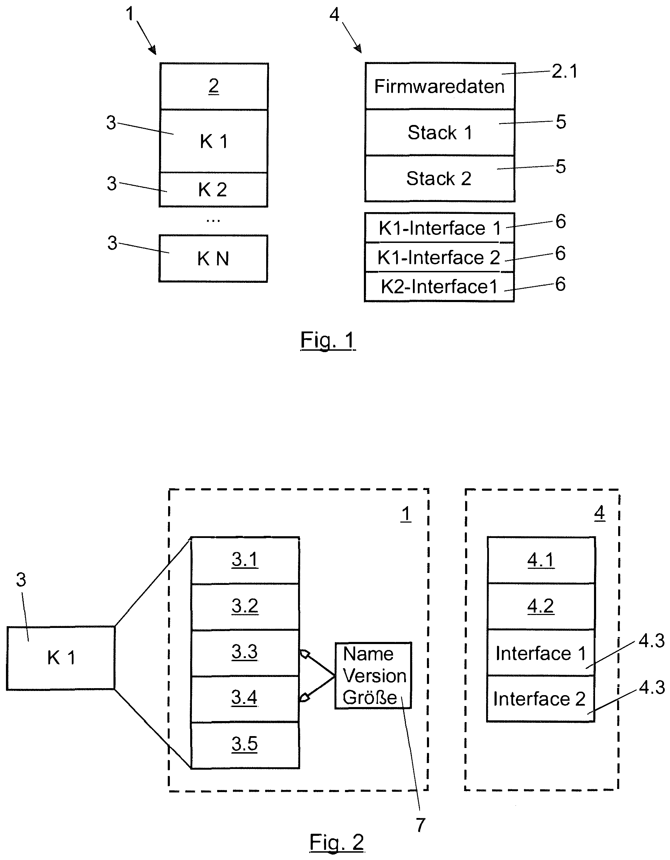

Figur 1 zeigt einen Hauptspeicher 1 sowie den Arbeitsspeicher, auch als Random-Access-Memory (RAM) 4 bezeichnet, eines erfindungsgemäßen Mikrocontrollers. Bei dem Hauptspeicher 1 handelt es sich insbesondere um einen Flashspeicherelement. In den Hauptspeicher 1 werden sukzessive Informationen gespeichert. Die Informationen stellen Quellcode zur Bereitstellung verschiedener Programme dar. Die Informationen werden zur Ausbildung einer Kette aneinandergereiht.

Gezeigt sind eine Basisfirmware 2, gefolgt von zumindest einem Komponentenblock 3. In dem in Figur 1 gezeigten Ausführungsbeispiel weist der Hauptspeicher eine Vielzahl an Komponentenblöcken 3 mit der Bezeichnung K1 bis K N auf. Dabei kann der Hauptspeicher 1 entweder freien Speicher aufweisen, wobei beim Ändern des Speicherinhalts des Hauptspeichers 1 gemäß eines erfindungsgemäßen Verfahrens weitere Komponentenblöcke 3 in den Hauptspeicher 1 eingebracht werden. Auch ist es möglich, dass der Hauptspeicher 1 bereits vollständig in Komponentenblöcke 3 unterteilt ist. Dabei kann es auch einen besonders großen Komponentenblock 3 geben, der dann beim Ändern des Inhalts des Hauptspeichers 1 in weitere Komponentenblöcke 3 unterteilt wird. Ein solcher Komponentenblock 3 lässt sich als Platzhalter verstehen.

Ferner zeigt Figur 1 den Inhalt des RAMs 4. Zu erkennen sind eine Basisfirmware-Sektion 2.1 sowie zumindest ein Stack 5, auch als Auslagerungsdatei bezeichnet. In dem Stack 5 wird durch den Prozessor des Mikrocontrollers auszuführender kompilierter Code entsprechender Programme sowie die von den jeweiligen Programmen für die Verarbeitung erforderter Daten vorgehalten. Ist der Prozessor bzw. der Mikrocontroller zur parallelen Abarbeitung, auch als Multithreading bezeichnet, eingerichtet, kann auch für jede Aufgabe ein eigener Stack 5 vorhanden sein, wie dargestellt.

Ferner finden sich Schnittstelleninformationen 6 im RAM 4, welche für jede von einem Komponentenblock 3 umfasste Programmkomponente, also eine Firmwarekomponente und/oder Anwendungsprogrammkomponente, beschreiben, welche Eingangsschnittstellen und Ausgangsschnittstellen wie miteinander verknüpft sind.

Figur 2 zeigt noch einmal den in den Hauptspeicher 1 und den RAM 4 geschriebenen Inhalt für einen jeweiligen Komponentenblock 3 im Detail. So umfasst jeder Komponentenblock 3 (hier beispielhaft K 1) in den Hauptspeicher 1 zu schreibende Informationen der Art einer Längen-Sektion 3.1, einer Text-Sektion 3.2, einer Eingangsschnittstellen-Sektion 3.3, einer Ausgabeschnittstellen-Sektion 3.4 und einer Parameter-Sektion 3.5.

Die Längen-Sektion 3.1 definiert den vom jeweiligen Komponentenblock 3 auf den Hauptspeicher 1 eingenommenen Bereich. Da die Komponentenblöcke 3 als Informationen nach Art einer Kette aneinandergehängt werden, ist der Mikroprozessor hierdurch dazu in der Lage, einen jeweiligen Beginn und Ende aller Komponentenblöcke 3 zu erkennen und kann somit für einen Schreib- bzw. Lesezugriff direkt zum jeweiligen Komponentenblock 3 auf den Hauptspeicher 1 springen.

Die Text-Sektion 3-2 stellt den eigentlichen Payload des Komponentenblocks 3 dar und enthält die Codeabschnitte zur Bereitstellung einer jeweiligen Firmwarekomponente bzw. Anwendungsprogrammkomponente. Hierbei handelt es sich um positionsunabhängigen Code, also Code der positionsunabhängig kompiliert wird, da die Reihenfolge und Position der jeweiligen Programmkomponente aus dem Komponentenblock 3 aus sich heraus nicht bekannt ist.

Die Eingangsschnittstellen-Sektion 3.3 beschreibt, welche Eingangsdaten von einer jeweiligen Programmkomponente angefordert werden. Entsprechend beschreibt die Ausgabeschnittstellen-Sektion 3.4, welche Ausgabedaten von einer jeweiligen Programmkomponente erzeugt werden. Die Eingangsschnittstellen-Sektion 3.3 und die Ausgabeschnittstellen-Sektion 3.4 lassen sich durch eine Schnittstellenspezifikation 7 beschreiben, welche eindeutig einen Bezeichner wie einen Namen, einen Versionshinweis und/oder eine Größe der jeweiligen Schnittstelle beschreibt.

Die Parameter-Sektion 3.5 schließlich beschreibt, mit welcher Frequenz eine jeweilige Programmkomponente eines jeweiligen Komponentenblocks 3 durch den Mikroprozessor ausgeführt wird und wieviel Speichergröße in Form des jeweiligen Stacks 5 bzw. ein Anteil an einem entsprechenden Stack 5 von der jeweiligen Programmkomponente auf dem RAM 4 eingefordert wird.

Ferner ist der RAM-Inhalt des jeweiligen Komponentenblocks 3 gezeigt. Zu erkennen sind eine Mapping-Struktur 4.1, eine Funktionsreihenfolgen-Struktur 4.2 sowie eine Ausgabenstruktur 4.3 für jede Programmkomponente.

Die Mapping-Struktur 4.1 beschreibt eine Struktur aus Zeigern zu einem jeweiligen vom Komponentenblock 3 verwendeten Eingangsschnittstellen und Ausgabeschnittstellen. Die Funktionsreihenfolgen-Struktur 4.2 beschreibt, in welcher Reihenfolge die jeweiligen vom Komponentenblock 3 umfassten Programmkomponenten durch den Mikroprozessor abzuarbeiten sind. In den jeweiligen Ausgabestrukturen 4.3 werden schließlich die Ausgabedaten nach Abarbeiten einer jeweiligen Programmkomponente geschrieben.

## Patentansprüche

1. Verfahren zum Ändern des Speicherinhalts eines Hauptspeichers (1) eines Mikrocontrollers ohne separate Speicherverwaltungseinheit, wobei ein Teil des Hauptspeichers (1) durch eine Basisfirmware (2) belegt ist, wobei
- beim Einbringen der Basisfirmware (2) in den Hauptspeicher (1) wenigstens ein Komponentenblock (3) mit in den Hauptspeicher (1) geschrieben wird, wobei der Komponentenblock (3) Codebestandteile zur Bereitstellung zumindest einer Firmwarekomponente und/oder zumindest einer Anwendungsprogrammkomponente sowie Speicherverwaltungsinformationen umfasst; und
- zum Ändern zumindest eines Teils der Codebestandteile wenigstens eines Komponentenblocks (3) ein Prozessor des Mikrokontrollers die Speicherverwaltungsinformationen verarbeitet und zu schreibende Informationen an durch die Speicherverwaltungsinformationen definierten Stellen in den Hauptspeicher (1) schreibt, und die Speicherverwaltungsinformationen des geänderten Komponentenblocks (3) aktualisiert werden, weiters dadurch charakterisiert, dass folgender Aufbau für einen jeweiligen Komponentenblock (3) realisiert wird:
- eine Längen-Sektion (3.1), definierend die Länge des durch den jeweiligen Komponentenblock (3) auf dem Hauptspeicher (1) belegten Bereichs;
- eine Text-Sektion (3.2), umfassend die Codebestandteile zur Bereitstellung der wenigstens einen Firmwarekomponente und/oder wenigstens einen Anwendungsprogrammkomponente;
**dadurch gekennzeichnet, dass** der Aufbau für einen jeweiligen Komponentenblock (3) weiters realisiert wird durch:
- eine Eingangsschnittstellen-Sektion (3.3), definierend welche Eingangsschnittstellen durch den jeweiligen Komponentenblock (3) zum Einlesen von Eingangsdaten ausgelesen werden;
- eine Ausgabeschnittstellen-Sektion (3.4), definierend welche Ausgabeschnittstellen durch den jeweiligen Komponentenblock (3) zum Ausgeben von Ausgabedaten geschrieben werden; und
- eine Parameter-Sektion (3.5), definierend eine Ausführungsfrequenz der von einem jeweiligen Komponentenblock (3) bereitstellbaren Firmwarekomponenten und/oder Anwendungsprogrammkomponenten sowie eine Anwendungsspeicheranforderungsinformation, welche definiert welche Speichergröße bei der Ausführung einer jeweiligen Firmwarekomponenten und/oder Anwendungsprogrammkomponenten auf einem RAM (4) des Mikrocontrollers belegt wird.

2. Verfahren nach Anspruch 1,
**dadurch gekennzeichnet, dass**
beim Hochfahren des Mikrocontrollers Variablen, welche durch einen jeweiligen Komponentenblock (3) ausgebbare Ausgabedaten repräsentieren, in den RAM (4) des Mikrocontrollers geschrieben werden.

3. Verfahren nach Anspruch 1 oder 2,
**dadurch gekennzeichnet, dass**
beim Hochfahren des Mikrocontrollers für jeden Komponentenblock (3) unter Berücksichtigung der jeweiligen Speicherverwaltungsinformationen folgende Informationen in den RAM (4) des Mikrocontrollers geschrieben werden:
- eine Mapping-Struktur (4.1), definierend an welche Stellen des RAMs (4) vom jeweiligen Komponentenblock (3) erzeugbare Ausgabedaten geschrieben werden sowie eine Zuordnung in welchen Speicherbereichen des RAMs (4) vom jeweiligen Komponentenblock erforderliche Eingangsdaten abgelegt sind;
- eine Funktionsreihenfolgen-Struktur (4.2), definierend eine jeweilige Reihenfolge der zur Bereitstellung der durch den jeweiligen Komponentenblock (3) bereitstellbaren Firmwarekomponenten und/oder Anwendungsprogrammkomponenten durch den Prozessor abzuarbeitenden Funktionen; und
- für jede Firmwarekomponente und/oder Anwendungsprogrammkomponente des jeweiligen Komponentenblocks (3): eine Ausgabestruktur (4.3), definierend durch die jeweilige Firmwarekomponente und/der Anwendungsprogrammkomponente zu schreibende Ausgabedaten.

4. Verfahren nach einem der Ansprüche 1 bis 3,
**dadurch gekennzeichnet, dass**
einem jeweiligen Komponentenblock (3) direkter Hardwarezugriff auf die Hardwarekomponenten des Mikrocontrollers gewährt wird.

5. Verfahren nach einem der Ansprüche 1 bis 4,
**dadurch gekennzeichnet, dass**
vor Ausführung der zumindest einen Firmwarekomponente und/oder zumindest einen Anwendungsprogrammkomponente eines jeweiligen Komponentenblocks (3) der Schreibzugriff auf den RAM (4) eingeschränkt wird, sodass für den jeweiligen Komponentenblock (3) lediglich durch den jeweiligen Komponentenblock (3) ausgebbare Ausgabedaten in den RAM (4) schreibbar sind.

6. Anwendung eines Verfahrens nach einem der Ansprüche 1 bis 5,
**gekennzeichnet durch**
eine Verwendung zum Durchführen einer Softwareaktualisierung eines im Hauptspeicher (1) des Mikrocontrollers bevorrateten Programms, insbesondere zum Aktualisieren der Firmware des Mikrocontrollers.

7. Mikrocontroller,
**gekennzeichnet durch**
eine Einrichtung zur Ausführung eines Verfahrens nach einem der Ansprüche 1 bis 5.

8. Fahrzeug,
**gekennzeichnet durch**
zumindest einen Mikrocontroller nach Anspruch 7.

## Claims

1. Method for modifying the memory contents of a main memory (1) of a microcontroller without a separate memory management unit, wherein a portion of the main memory (1) is occupied by base firmware (2),
wherein
- when the base firmware (2) is incorporated into the main memory (1), at least one component block (3) is also written to the main memory (1), wherein the component block (3) comprises code components for providing at least one firmware component and/or at least one application program component and memory management information; and
- in order to modify at least some of the code components of at least one component block (3), a processor of the microcontroller processes the memory management information and writes to the main memory (1), at locations defined by the memory management information, information to be written, and the memory management information of the modified component block (3) is updated,
further **characterized in that**
the following structure is implemented for each component block (3):
- a length section (3.1) defining the length of the area occupied on the main memory (1) by the relevant component block (3);
- a text section (3.2) comprising the code components for providing the at least one firmware component and/or at least one application program component;
**characterized in that** the structure is further implemented for each component block (3) by:
- an input interface section (3.3) defining which input interfaces are read out by the relevant component block (3) for reading in input data;
- an output interface section (3.4) defining which output interfaces are written by the relevant component block (3) for outputting output data; and
- a parameter section (3.5) defining an execution frequency of the firmware components and/or application program components that can be provided by a relevant component block (3) and application memory request information which defines the memory size occupied on a RAM (4) of the microcontroller when a relevant firmware component and/or application program component is executed.

2. Method according to claim 1,
**characterized in that**
when the microcontroller is started up, variables which represent output data that can be output by a relevant component block (3) are written to the RAM (4) of the microcontroller.

3. Method according to claim 1 or 2,
**characterized in that**
when the microcontroller is started up, the following information is written to the RAM (4) of the microcontroller for each component block (3), taking into account the relevant memory management information:
- a mapping structure (4.1) defining locations of the RAM (4) to which output data that can be generated by the relevant component block (3) are written and memory areas of the RAM (4) to which are assigned to be stored input data required by the relevant component block;
- a function sequence structure (4.2) defining a relevant sequence of the functions to be processed by the processor in order to provide the firmware components and/or application program components that can be provided by the relevant component block (3); and
- for each firmware component and/or application program component of the relevant component block (3): an output structure (4.3) defining output data to be written by the relevant firmware component and/or application program component.

4. Method according to any of claims 1 to 3,
**characterized in that**
direct hardware access to the hardware components of the microcontroller is granted to a relevant component block (3).

5. Method according to any of claims 1 to 4,
**characterized in that**
before the at least one firmware component and/or at least one application program component of a relevant component block (3) is executed, the write access to the RAM (4) is restricted so that for the relevant component block (3), only output data that can be output by the relevant component block (3) can be written to the RAM (4).

6. Application of a method according to any of claims 1 to 5,
**characterized by**
being used to perform a software update of a program stored in the main memory (1) of the microcontroller, in particular for updating the firmware of the microcontroller.

7. Microcontroller,
**characterized by**
a device for carrying out a method according to any of claims 1 to 5.

8. Vehicle,
**characterized by**
at least one microcontroller according to claim 7.

## Revendications

1. Procédé permettant de modifier le contenu de mémoire d'une mémoire centrale (1) d'un microcontrôleur sans unité de gestion de mémoire distincte, dans lequel une partie de la mémoire centrale (1) est occupée par un microprogramme de base (2), dans lequel
- lors de l'introduction du microprogramme de base (2) dans la mémoire centrale (1), au moins un bloc de composants (3) est écrit dans la mémoire centrale (1), dans lequel le bloc de composants (3) comprend des éléments de code permettant de fournir au moins un composant de microprogramme et/ou au moins un composant de programme d'application, ainsi que des informations de gestion de mémoire ; et
- pour la modification d'au moins une partie des éléments de code d'au moins un bloc de composants (3), un processeur du microcontrôleur traite les informations de gestion de mémoire et écrit des informations à écrire à des emplacements de la mémoire centrale (1) définis par les informations de gestion de mémoire, et les informations de gestion de mémoire du bloc de composants (3) modifié sont mises à jour,
**caractérisé en ce que**, en outre,
le format suivant est réalisé pour un bloc de composants (3) respectif :
- une section longueur (3.1) définissant la longueur de la zone de la mémoire centrale (1) qui est occupée par le bloc de composants (3) respectif ;
- une section texte (3.2) comprenant les éléments de code permettant de fournir l'au moins un composant de microprogramme et/ou l'au moins un composant de programme d'application ;
**caractérisé en ce que** le format d'un bloc de composants (3) respectif est en outre réalisé par :
- une section interfaces d'entrée (3.3) définissant quelles interfaces d'entrée sont extraites par le bloc de composants (3) respectif pour l'introduction en mémoire de données d'entrée ;
- une section interfaces de sortie (3.4) définissant quelles interfaces de sortie sont écrites par le bloc de composants (3) respectif pour la sortie de données de sortie ; et
- une section paramètres (3.5) définissant une fréquence d'exécution des composants de microprogramme et/ou des composants de programme d'application pouvant être fournis par un bloc de composants (3) respectif, ainsi que d'une information de besoin en mémoire d'application qui définit la quantité de mémoire occupée d'une mémoire vive (4) du microcontrôleur lors de l'exécution d'un composant de microprogramme et/ou d'un composant de programme d'application respectifs.

2. Procédé selon la revendication 1,
**caractérisé en ce que**
lors de la mise sous tension du microcontrôleur, des variables représentant des données de sortie pouvant être sorties par un bloc de composants (3) respectif sont écrites dans la mémoire vive (4) du microcontrôleur.

3. Procédé selon la revendication 1 ou 2,
**caractérisé en ce que**
lors de la mise sous tension du microcontrôleur, les informations suivantes sont écrites dans la mémoire vive (4) du microcontrôleur pour chaque bloc de composants (3), en prenant en compte les informations de gestion de mémoire respectives :
- une structure de mappage (4.1) définissant les emplacements de la mémoire vive (4) dans lesquels sont écrites les données de sortie pouvant être générées par le bloc de composants (3) respectif, ainsi qu'une attribution des zones de mémoire de la mémoire vive (4) dans lesquelles sont stockées les données d'entrée requises par le bloc de composants respectif ;
- une structure d'ordre de fonctions (4.2) définissant un ordre respectif des fonctions à traiter par le processeur et permettant la fourniture des composants de microprogramme et/ou les composants de programme d'application pouvant être fournis par le bloc de composants (3) respectif ; et
- pour chaque composant de microprogramme et/ou composant de programme d'application du bloc de composants (3) respectif : une structure de sortie (4.3) définissant des données de sortie à écrire par le composant de microprogramme et/ou le composant de programme d'application respectifs.

4. Procédé selon l'une des revendications 1 à 3,
**caractérisé en ce que**
un bloc de composants (3) respectif bénéficie d'un accès matériel direct aux composants matériels du microcontrôleur.

5. Procédé selon l'une des revendications 1 à 4,
**caractérisé en ce que**
avant l'exécution de l'au moins un composant de microprogramme et/ou de l'au moins un composant de programme d'application d'un bloc de composants (3) respectif, l'accès en écriture à la mémoire vive (4) est restreint de sorte que, pour le bloc de composants (3) respectif, seules les données de sortie pouvant être sorties par le bloc de composants (3) respectif peuvent être écrites dans la mémoire vive (4).

6. Utilisation d'un procédé selon l'une des revendications 1 à 5, **caractérisée par**
une utilisation permettant la mise en œuvre d'une mise à jour logicielle d'un programme stocké dans la mémoire centrale (1) du microcontrôleur, en particulier permettant la mise à jour du microprogramme du microcontrôleur.

7. Microcontrôleur,
**caractérisé par**
un dispositif permettant l'exécution d'un procédé selon l'une des revendications 1 à 5.

8. Véhicule,
**caractérisé par**
au moins un microcontrôleur selon la revendication 7.
